# EUROPÄISCHE PATENTANMELDUNG

(11) **EP 3 231 740 A1**
(43) Veröffentlichungstag der Anmeldung: **18.10.2017**
(21) Anmeldenummer: 17165155.7
(22) Anmeldetag: 06.04.2017
(51) Int. Cl.: B65G 1/14

(54) **STAPELSÄULE**

(30) Priorität: 11.04.2016 DE 102016106587
(71) Anmelder: MTS Maschinenbau GmbH, 88512 Mengen (DE)
(72) Erfinder: STROBEL, Gustav, 88348 Bad Saulgau (DE)
(74) Vertreter: Patentanwälte und Rechtsanwalt Weiß, Arat & Partner mbB

(57) **Zusammenfassung**

Bei einer Stapelsäule zum Halten von Lagergut mittels Klinken (1), welche schwenkbar um eine Drehachse (2) von einer Ruhelage gegebenenfalls über eine Bereitschaftsstellung in eine Gebrauchslage an zumindest einer Seitenwange (4.1, 4.2) angeordnet sind, soll der Klinke (1) ein Kraftspeicher (23) zugeordnet sein, welcher die Klinke (1) sowohl in Ruhelage als auch in Gebrauchslage hält.

## Beschreibung

Die Erfindung betrifft eine Stapelsäule zum Halten von Lagergut mittels Klinken, welche schwenkbar um eine Drehachse von einer Ruhelage gegebenenfalls über eine Bereitschaftsstellung in eine Gebrauchslage an zumindest einer Seitenwange angeordnet sind.

### Stand der Technik

Stapelsäulen sind in vielfältiger Form und Ausführung bekannt und auf dem Markt. Sie dienen in der Regel dazu, Lagergüter, insbesondere Karosserieteile, nach deren Herstellung in z.B. einer Presse aufzunehmen und zu weiteren Bearbeitungsstationen zu transportieren. Die Funktion der Stapelsäulen ist meist die gleiche. Wird das zu lagernde Werkstück in ein Gestell aus mehreren Stapelsäulen eingebracht, so schwenken die untersten Klinkenhebel bei Auflage der Formstücke in eine Arbeitsposition, wobei die Klinkenhebel jeweils einen nachfolgenden Klinkenhebel aus einer Ruhelage in eine Bereitschaftsposition mitnehmen. Das nächste einzubringende Formstück bringt den nachfolgenden Klinkenhebel aus der Bereitschaftsposition in die Arbeitsposition, in der die Klinken das Formstück halten, und die nachfolgende Klinke in Bereitschaftsposition.

Meist handelt es sich dabei um vertikale Stapelsäulen, wie sie beispielsweise in der DE 38 11 310 C2 gezeigt sind. Dabei befinden sich an Säulen übereinander drehbar gelagerte zweiarmige Klinkenhebel, die jeweils einen ein Lagergut aufnehmenden Tragarm sowie einen Steuerarm aufweisen und aus einer Ruhestellung über eine Bereitschaftsstellung in eine Arbeitsstellung und wieder zurück verschwenkbar sind, wobei beim Auflegen eines Lagergutes ein in Bereitschaftsstellung befindlicher Klinkenhebel in seine Arbeitsstellung gelangt und gleichzeitig ein darüber angeordneter Klinkenhebel durch den Steuerarm des in Arbeitsstellung gelangenden Klinkenhebels aus seiner Ruhestellung in seine Bereitschaftsstellung geschwenkt wird, wobei ferner sich die in Arbeitsstellung befindlichen Klinkenhebel gegenseitig in dieser Stellung verriegeln.

### Aufgabe

Aufgabe der vorliegenden Erfindung ist es, eine Stapelsäule der oben genannten Art zu entwickeln, bei der auch eine sehr kleine Teilung möglich ist, das heisst, der Abstand der Klinken auf das Äusserste minimiert werden kann und bei der ferner eine Steuerung der Klinken in den verschiedenen Lagen auf einfache Art und Weise möglich ist. Ferner soll auch eine Teilbeladung möglich sein.

### Lösung der Aufgabe

Zur Lösung der Aufgabe führt, dass der Klinke ein Kraftspeicher zugeordnet ist, welcher die Klinke sowohl in Ruhelage als auch in Gebrauchslage hält.

Das bedeutet, dass die Klinken in jeder Lage durch den Kraftspeicher vorgespannt sind und in dieser Lage gehalten werden, so dass ein Lageveränderung ohne Wollen des Benutzers ausgeschlossen wird. Dabei wird natürlich auch ein unerwünschtes Klappern von nicht beladenen Klinken vermieden.

Als Lage der Klinken ist insbesondere die Ruhelage und die Gebrauchslage zu erwähnen. Bei der Ruhelage befindet sich die Klinke ausserhalb des Zugriffsbereichs des Ladeguts, in der Gebrauchslage befindet sich die Klinke in der Haltelage für das Ladegut. Dazwischen wird in der Regel noch eine Bereitschaftsstellung angesteuert, in der sich die Klinke zwischen Ruhelage und Gebrauchslage befindet, d.h., in Warteposition zur Aufnahme des Ladeguts. Diese Bereitschaftsstellung spielt aber für die vorliegende Erfindung nur eine untergeordnete Rolle.

Ferner soll ausdrücklich erwähnt werden, dass die vorliegende Erfindung nicht nur für vertikale Stapelsäulen gedacht ist, sondern auch bei horizontalen Stapelsäulen bzw. schräg angeordneten Stapelsäulen Anwendung finden kann.

Grundgedanke der vorliegenden Erfindung ist, dass der Kraftspeicher und mit ihm auch die Klinke einen Todpunkt zwischen Ruhelage und Gebrauchslage überfahren kann. Als Totpunkt bietet sich vor allem die Drehachse an. Befindet sich der Kraftspeicher auf der einen Seite der Drehachse, hält er die Klinke in der Ruhelage, befindet er sich auf der anderen Seite der Drehachse hält er die Klinke in Gebrauchslage.

Der Versatz des Kraftspeichers, der im bevorzugten, aber nicht beschränkenden Ausführungsbeispiel als Schraubenfeder ausgebildet ist, wird durch einen beliebig ausgestalteten Schieber bewirkt, der beispielsweise entlang einer Seitenwange der Stapelsäulen geführt ist. Ist der Kraftspeicher als Schraubenfeder ausgebildet, so besitzt diese zwei Hakenenden. Ein Hakenende wird in das der entsprechenden Klinke zugeordnete Loch des Schiebers eingehängt, das andere Ende in ein Loch einer Zunge an der Klinke. Dies ist aber nur ein Ausführungsbeispiel.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Seitenansicht einer erfindungsgemässen Stapelsäule mit einer teilweisen Darstellung von übereinander angeordneten Klinken, die in Wirkverbindung miteinander stehen;
**Figur 2** eine Seitenansicht einer Anordnung für übereinander angeordneten Klinken, die über ein Hebelgestänge miteinander in Wirkverbindung stehen;
**Figur 3** eine vergrössert dargestellte Draufsicht auf zwei zusammen wirkende Mitnehmer;
**Figur 4** eine Seitenansicht eines weiteren Ausführungsbeispiel von übereinander angeordneten Klinken;
**Figur 5** eine Seitenansicht der Anordnung gemäss Figur 4 mit einer erfindungsgemässen Todpunktsteuerung.

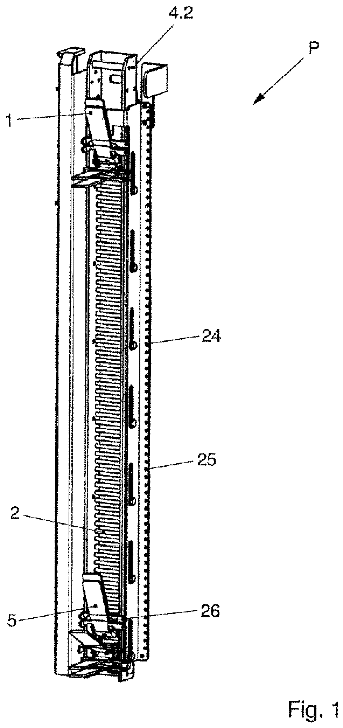

Gemäss Figur 1 ist eine Stapelsäule P zur Aufnahme eines Ladegutes gezeigt, wobei zur Halterung des Ladegutes eine Mehrzahl von Klinken 1 übereinander angeordnet dargestellt ist und sich diese Klinken 1 üblicherweise an zumindest einer vertikal stehenden Seitenwange beziehungsweise zwischen zwei Seitenwangen 4.1 und 4.2 eines U-Profils 3 befinden. Mit diesem beziehungsweise diesen Seitenwangen 4.1 und 4.2 sind die Klinken 1 über jeweils eine Drehachse 2 verbunden, wobei die Klinken 1 um die Drehachse 2 drehen.

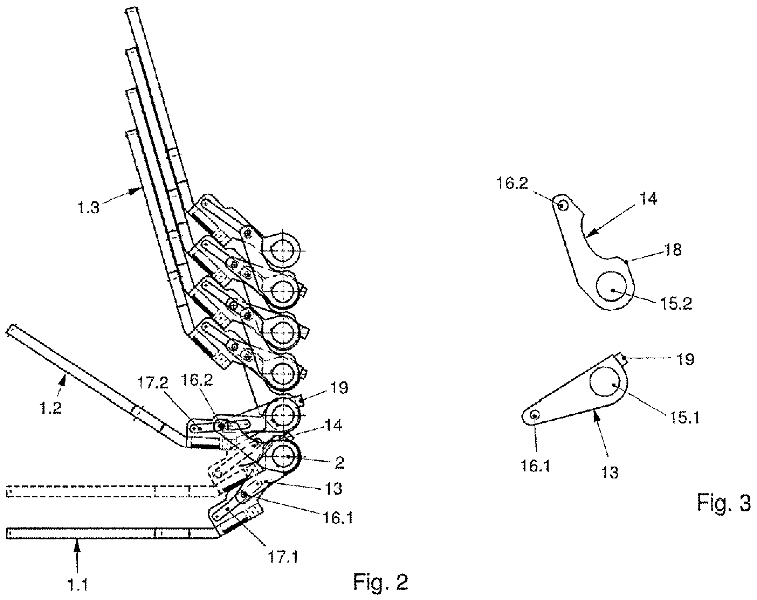

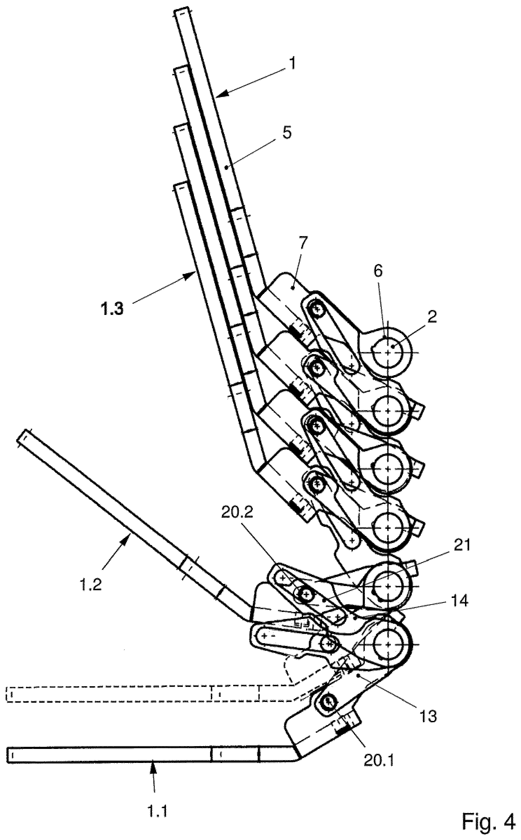

Wie in Figur 2 und 4 gezeigt, befindet sich die Drehachse 2 an einem hinteren Ende der Klinke 1, wobei die Drehachse beispielsweise durch einen Drehbolzen gebildet wird, der eine entsprechende axiale Bohrung beziehungsweise axiale Ausnehmungen 6 in dem hinteren Ende durchsetzt und beidends in die oben erwähnten Seitenwangen 4.1 und 4.2 eingesetzt ist.

Die entsprechenden axialen Ausnehmung 6 zur Aufnahme der Drehachse 2 können in beidseits an den Klinken 1 vorgesehenen Wänden 7 vorgesehen sein, welche von einem Tragstreifen 5 der Klinke 1 nach oben abragen. Der Tragstreifen 5 dient der Halterung von auf die Klinken 1 aufgelegtem Lagergut.

Gemäss den Figuren 2 und 4 wird in zwei Ausführungsbeispielen der Erfindung eine Wirkverbindung zwischen den einzelnen Klinken durch ein Hebelgestänge und insbesondere zwei Mitnehmer 13 und 14 bewirkt, wie dies insbesondere in der EP 2 305 580 A2 beschrieben und auf die besonders Bezug genommen wird. Beide Mitnehmer sitzen auf derselben Drehachse 2, weshalb sie jeweils eine Drehöffnung 15.1 beziehungsweise. 15.2 aufweisen. Gegenüber der jeweiligen Drehöffnung 15.1 beziehungsweise 15.2 ragen von den Mitnehmern 13 beziehungsweise 14 Bolz 16.1 beziehungsweise 16.2 ab, die in jeweilige Langlöcher 17.1 beziehungsweise 17.2 eingreifen.

Des Weiteren besitzt der obere Mitnehmer 14 eine Steuerkante 18, die gegenüber der Drehöffnung 15.2 als Materialanhäufung hervorsteht. Mit der Steuerkante 18 wirkt ein Anschlag 19 an dem unteren Mitnehmer 13 zusammen und zwar in der Weise, dass der Anschlag 19, der hackenförmig das Ende des oberen Mitnehmers 15 umfasst, in einem weiten Bereich frei um den oberen Mitnehmer 14 drehen kann, jedoch bei dieser Drehung dann auf die Steuerkante 18 aufläuft und den oberen Mitnehmer 14 entgegen dem Uhrzeigersinn mitnimmt.

Die Klinke 1.1 befindet sich gemäss Figur 4 in Arbeitsstellung, wobei ein nicht näher gezeigtes Ladegut auf ihr aufliegt. Bei der Drehung von einer Bereitschaftsstellung in die Arbeitslage hat die Klinke 1.1 die nachfolgende Klinke 1.2 in Bereitschaftsstellung mitgenommen, da der Anschlag 19 auf die Steuerkante 18 aufgelaufen ist und so den oberen Mitnehmer 14 mitgeführt hat.

Wird nun ein Ladegut auf die Klinke 1.2 aufgelegt, so dreht diese Klinke 1.2 in die Arbeitsstellung und nimmt dabei über den Anschlag 19 den nachfolgenden Mitnehmer 14 mit, der wiederum die nachfolgende Klinke 1.3 in Bereitschaftsstellung schwenkt.

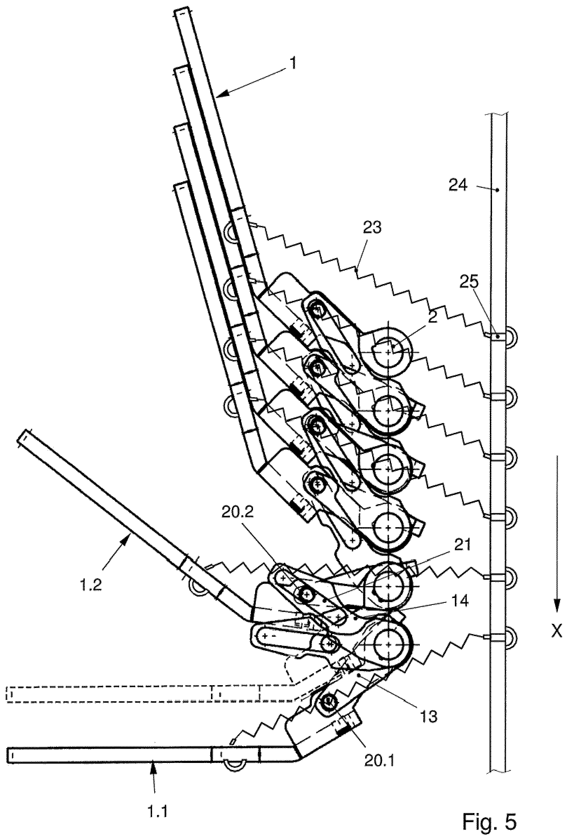

Das Ausführungsbeispiel der Erfindung gemäss Figur 4 unterscheidet sich von demjenigen nach den Figuren 4 und 5 nur dadurch, das in diesem Fall Langlöcher und Bolzen vertauscht sind. Der der unteren Klinke 1.1 zugeordnete Mitnehmer 13 weist dabei eine feste Bolzenverbindung 20.1 mit dem unteren Mitnehmer 13 auf. Die nachfolgende Klinke 1.2 dagegen besitzt einen Bolzen 20.2, wobei dieser Bolzen 20.2 in einem Langloch 21 in dem oberen Mitnehmer 14 geführt ist. Die Funktionsweise entspricht aber derjenigen des Ausführungsbeispiels gemäss den Figuren 4 und 5.

Gemäss Figur 5 ist nun die erfindungsgemässe Totpunktsteuerung dargestellt. Hierzu ist jede Klinke 1 über einen Kraftspeicher 23 mit einem Schieber 24 verbunden. Dazu sind einerseits in dem Schieber 24, wie in Figur 1 dargestellt, Löcher 25 vorgesehen, während andererseits von dem Tragstreifen 5 der Klinke 1 eine Zunge 26 abragt, die ein Loch zum Einhängen des z.B. als Schraubenfeder ausgebildeten Kraftspeichers 23 aufweist.

Die Funktionsweise der vorliegenden Erfindung ist folgende:

In Ruhelage der Klinken befindet sich der Schieber 24 in Ausgangslage, in welcher das Loch 25 und damit auch ein Ende des Kraftspeichers 23 in etwa auf der Höhe der Drehachse 2 ist. Der Kraftspeicher 23 hält die Klinke 1 in Ruhelage.

Die unterste Klinke 1.1 ist bereits beladen und hat über das Hebelgestänge die darüberliegende Klinke 1.2 gegen die Kraft des Kraftspeichers 23 in Bereitschaftsstellung gebracht. Nunmehr wird auf diese Klinke 1.2 eine Last bzw. ein Ladegut aufgelegt, sodass diese Klinke 1.2 in Gebrauchslage wie die Klinke 1.1 gebracht wird. Dabei überfährt der Kraftspeicher 23 die Drehachse 2 und damit auch seinen Todpunkt, so dass nunmehr durch den Kraftspeicher 23, der sich jetzt andererseits der Drehachse 2 befindet, die Klinke 1.2, wie die Klinke 1.1, in Gebrauchslage gespannt gehalten wird. Auf diese Weise wird eine Klinke nach der anderen beladen, bis die Stapelsäule voll ist. Danach wird die oberste Klinke auf beliebige Art und Weise verriegelt.

Zum Entladen wird das Ladegut entnommen, wobei mit dem Entnehmen auch die über dem Ladegut liegende Klinke angehoben wird, bis der Kraftspeicher 23 den Todpunkt überwindet und die Klinke 1 in Ruhelage zieht.

Die vorliegende Erfindung erlaubt es aber auch, die Stapelsäule nur teilweise zu beladen. Sobald das letzte Ladegut zum Beispiel auf die Klinke 1.2 aufgelegt ist und sich diese Klinke in der gestrichelt gezeigten Gebrauchslage befindet, wird der Schieber 24 in Richtung x bewegt, so das die Kraftspeicher 23 der noch nicht beladenen und sich gegebenenfalls in Ruhelage befindlichen Klinke 1 so versetzt wird, dass er seinen Todpunkt überfährt und die jeweilige Klinke 1 in Gebrauchslage zieht. Gleichzeitig wird die oberste Klinke verriegelt, sodass damit auch alle Klinken verriegelt sind.

Zur Entnahme wird die oberste Klinke entriegelt, die nachfolgenden Klinken folgen bei entsprechender Anordnung des Schiebers 24 in die Ruhelage nach oder werden durch die Entnahme des Ladegutes in die Ruhelage bewegt. In dieser werden sie wieder durch den Kraftspeicher 23 gehalten.

**Bezugszeichenliste**

| | | | | | |
|---|---|---|---|---|---|
| 1 | Klinke | 34 | | 67 | |
| 2 | Drehachse | 35 | | 68 | |
| 3 | U-Profil | 36 | | 69 | |
| 4 | Seitenwange | 37 | | 70 | |
| 5 | Tragstreifen | 38 | | 71 | |
| 6 | Ausnehmung | 39 | | 72 | |
| 7 | Wand | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | Mitnehmer | 46 | | 79 | |
| 14 | Mitnehmer | 47 | | | |
| 15 | Drehöffnung | 48 | | | |
| 16 | Bolzen | 49 | | | |
| 17 | Langloch | 50 | | | |
| 18 | Steuerkante | 51 | | | |
| 19 | Anschlag | 52 | | | |
| 20 | Bolzenverbindung | 53 | | | |
| 21 | Langloch | 54 | | | |
| 22 | | 55 | | | |
| 23 | Kraftspeicher | 56 | | | |
| 24 | Schieber | 57 | | P | Stapelsäule |
| 25 | Loch | 58 | | | |
| 26 | Zunge | 59 | | | |
| 27 | | 60 | | | |
| 28 | | 61 | | X | Bewegungsrichtung |
| 29 | | 62 | | | |
| 30 | | 63 | | | |
| 31 | | 64 | | | |
| 32 | | 65 | | | |
| 33 | | 66 | | | |

## Patentansprüche

1. Stapelsäule zum Halten von Lagergut mittels Klinken (1), welche schwenkbar um eine Drehachse (2) von einer Ruhelage gegebenenfalls über eine Bereitschaftsstellung in eine Gebrauchslage an zumindest einer Seitenwange (4.1, 4.2) angeordnet sind,
**dadurch gekennzeichnet,**
**dass** der Klinke (1) ein Kraftspeicher (23) zugeordnet ist, welcher die Klinke (1) sowohl in Ruhelage als auch in Gebrauchslage hält.

2. Stapelsäule nach Anspruch 1, **dadurch gekennzeichnet, dass** der Kraftspeicher (23) bei Bewegung der Klinke (1) von der Ruhelage in die Gebrauchslage die Drehachse (2) überfährt.

3. Stapelsäule nach Anspruch 1 oder 2, **dadurch gekennzeichnet, dass** der Kraftspeicher (23) eine Schraubenfeder ist.

4. Stapelsäule nach einem der vorhergehenden Ansprüche, **dadurch gekennzeichnet, dass** der Kraftspeicher (23) einerseits fern der Drehachse (2) mit der Klinke (1) und andererseits mit einem Schieber (24) verbunden ist.

5. Stapelsäule nach Anspruch 4, **dadurch gekennzeichnet, dass** der Schieber (24) entlang der Seitenwange (4.2) gleitbar angeordnet ist.

6. Stapelsäule nach einem der vorhergehenden Ansprüche, **dadurch gekennzeichnet, dass** die Klinken (1) über ein Hebelgestänge miteinander verbunden sind.
